# EUROPEAN PATENT SPECIFICATION

(11) **EP 0 404 530 B1**
(45) Date of publication and mention of the grant of the patent: **31.08.1994**
(21) Application number: 90306703.1
(22) Date of filing: 20.06.1990
(51) Int. Cl.: B60G 11/22

(54) **Suspension unit**
Aufhängungselement
Elément de suspension

(30) Priority: 22.06.1989 GB 8914374
(43) Date of publication of application: 27.12.1990
(73) Proprietor: INDESPENSION LIMITED, Bolton BL1 7AQ (GB)
(72) Inventor: Brindle, Kevan Frank, Belmont, Bolton BL7 8AH (GB)
(74) Representative: Low, Peter John

(56) References cited:
- DE-C- 972 239
- DE-U- 1 994 572
- DE-U- 8 707 020
- FR-A- 2 442 728
- GB-A- 1 301 640
- US-A- 1 869 137

## Description

The present invention relates to a suspension unit particularly for use in vehicles such as trailers and the like.

Known suspension units used on trailers tend to have an undesirably hard ride especially when a light load is applied thereto.

DE-U-1994572, corresponding to the preamble of claim 1, describes a suspension unit wherein the bearing pipe has inwardly protruding stops to prevent rotation when maximum deflection is reached.

The present invention seeks to provide a solution to this problem.

According to the present invention there is provided a suspension unit comprising a tubular member, an elongate member extending through the tubular member, the elongate member being rotatable about its longitudinal axis, a torque arm connected to one end of the elongate member, the wall of the elongate member comprising a plurality of apices extending towards the tubular member such that a plurality of chambers are defined between the wall of the elongate member and the tubular member, an elongate resiliently deformable member being provided in each chamber, wherein the chambers are non-symmetrical when viewed in cross-section when substantially no load is applied to the suspension unit, characterised in that the minimum distance between any two points lying on both the inner surface of the tubular member and on a line passing through the longitudinal axis of the elongate member is greater than the maximum distance between any two points lying on both the outer surface of the elongate member and on a line passing through the longitudinal axis of the elongate member.

Torque arms may extend from one or both ends of the elongate member. When the suspension unit is intended for use with a vehicle, a stub axle for a wheel may be provided at the end of the torque arm remote from the elongate member.

The tubular member is preferably substantially square shaped in cross-section, each wall of the tubular member being outwardly deformed, deformation having a peak substantially a third of the distance along the wall from one end. In this preferred embodiment four internal angles of the tubular member will be greater than 180°. The portion of the wall extending from the other end of each side is preferably substantially flat and does not extend outwardly.

The elongate member is preferably substantially square shaped, in cross-section the profile of the elongate member between each adjacent pair of exterior apices is preferably concave.

The elongate member may be solid or hollow or a combination of the two. Both the elongate member and the tubular member may be made from any material of suitable strength. Steel is preferred.

The elongate resilient members may be made from any suitable deformable material such as rubber.

In order that the invention may be more readily understood a specific embodiment thereof will now be described by way of example with reference to the accompanying drawings in which:-
- Fig. 1: is a cross-section of a suspension unit in an unladen condition; and
- Fig. 2: is a cross-section of the suspension unit of Fig.1 to which a load has been applied.

Referring to the drawings a suspension unit 10 comprises a tubular member 12 and an elongate member 30 co-axially located in the tubular member 12.

The tubular member 12 is notionally square shaped in cross-section. Each wall 14a, 14b, 14c, 14d of the tubular member 14 is deformed outwardly such that the degree of deformation has a peak 16a to 16d located substantially a third of the distance from one end 18a to 18d of each wall 14.

The portion 22a to 22d of the wall 14 which extends from the other end 20a to 20d of each wall for substantially one third the distance of the wall up to 24a to 24d is substantially flat and substantially retains the dimensions of the notional square cross-section.

The elongate member 30 is also notionally square in cross-section. The elongate member 30 is co-axially located in the tubular member 12 and is free to rotate relative to the tubular member 12.

The profile of each wall 32 of the elongate member 30 is concave between adjacent exterior apices 34 so as to provide an elongate recess along the length of each exterior surface of the elongate member 30.

The apices 34 of the elongate member 30 together with the interior of the tubular member 12 define four chambers 40.

Four resiliently deformable elongate members such as rubber cords 42 extend through the tubular member 12 inbetween the exterior of the elongate member 30 and interior surface of the tubular member 12. These rubber cords 42 act as shock absorbers for the suspension unit 10.

One end of the elongate member 30 is connected to a torque arm 44 which angularly extends relative to the elongate member 30. Owing to the non-symmetrical shape of the tubular member 12 the suspension unit 10 will only successfully operate when the torque arm 44 extends in one direction relative to the tubular member 12. Here the torque arm 44 extends to the right as shown in the drawings. In one application of this invention a wheel is received on a stub axle provided at the free end of the torque arm 44.

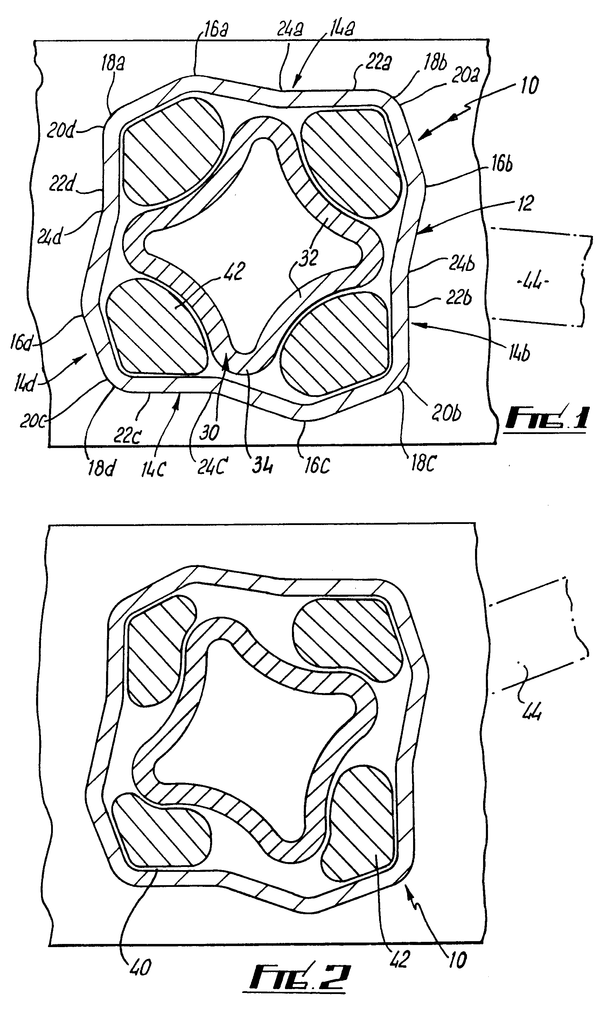

When the suspension unit 10 is unladen the elongate member 14 is positioned substantially as shown in Fig.1. The application of a load to the suspension unit 10 causes the elongate member 30 to rotate. As the torque arm 44 extends to the right of the suspension unit as shown in Figs.1 and 2 when a load is applied the suspension unit 10 moves downwardly. As the free end of the torque arm 44 is stationary the torque arm causes the elongate member 30 to rotate in an anti-clockwise direction when a load is applied.

As the elongate member 30 rotates the apices 34 engage the rubber cords 42 causing deformation of the rubber cords 42. The rubber cords 42 resist the deformation until an equilibrium position is achieved as is shown in Fig.2.

By increasing the cross-section area of the chamber 40 into which each rubber cord 42 is forced by the apices 34 of the elongate member 30, it has been found that the suspension unit 10 offered by the present invention is not as hard as that offered by known arrangements especially when the suspension unit 10 is subjected to a light load.

When the load is removed from the suspension unit 10 the elongate member returns to a position substantially the same as that shown in Fig.1.

It is to be understood that the above described embodiment is by way of example only and that many modifications and variations may be made within the scope of the invention as defined in the claims.

## Claims

1. A suspension unit (10) comprising a tubular member (12), an elongate member (30) extending through the tubular member (12), the elongate member (30) being rotatable about its longitudinal axis, a torque arm (44) connected to one end of the elongate member (30), the wall of the elongate member (30) comprising a plurality of apices (34) extending towards the tubular member (12), such that a plurality of chambers are defined between the wall of the elongate member (30) and the tubular member (12), an elongate resiliently deformable member (42) being provided in each chamber, wherein the chambers are non-symmetrical when viewed in cross-section when substantially no load is applied to the suspension unit (10), characterised in that the minimum distance between any two points lying on both the inner surface of the tubular member (12) and on a line passing through the longitudinal axis of the elongate member (30) is greater than the maximum distance between any two points lying on both the outer surface of the elongate member (30) and on a line passing through the longitudinal axis of the elongate member (30).

2. A suspension unit (10) as claimed in claim 1, wherein the elongate resiliently deformable members (42) are urged towards said regions of the chamber on application of a load to the suspension unit (10).

3. A suspension unit (10) as claimed in claim 1, wherein the number of apices (34) of the elongate member (30), the number of said outwardly deformed regions of the tubular member (12) and the number of resiliently deformable members (42) are the same.

4. A suspension unit (10) as claimed in any preceding claim, wherein the number of internal angles greater than 180° equals the number of said outwardly deformed regions of the tubular member.

5. A suspension unit (10) as claimed in any preceding claim, wherein the tubular member (12) comprises a number of walls (14) each wall being outwardly deformed, the deformation having a peak (16) substantially a third of the distance along the wall (14) from one end of that wall (14).

6. A suspension unit (10) as claimed in claim 5, wherein the portion of the wall (14) of the tubular member (12) extending from the other end of said wall (14) is substantially not deformed outwardly.

7. A suspension unit (10) as claimed in any preceding claim, wherein the elongate member (30) comprises a concave region between adjacent apices (34).

8. A suspension unit (10) as claimed in any preceding claim, wherein at least one of the elongate member (30) or the tubular member (12) comprises a metal.

9. A suspension unit (10) as claimed in any preceding claim, wherein a stub axle is provided at the end of the torque arm (44) remote from the elongate member (30).

## Patentansprüche

1. Aufhängungseinheit (10) mit einem rohrförmigen Teil (12), einem sich durch den rohrförmigen Teil (12) erstreckenden, langgestreckten Körper (30), wobei der langgestreckte Körper (30) um seine Längsachse drehbar ist, einem Drehmomentarm (44), der mit einem Ende des langgestreckten Körpers (30) verbunden ist, wobei die Wand des langgestreckten Körpers (30) eine Mehrzahl von Erhebungen (34) aufweist, die sich in Richtung auf den rohrförmigen Teil (12) erstrecken, dergestalt, daß eine Mehrzahl von Kammern zwischen der Wand des langgestreckten Körpers (30) und dem rohrförmigen Teil (12) definiert werden, wobei ein langgestrecktes, federnd verformbares Glied (42) in jeder Kammer vorgesehen ist und die Kammern, im Querschnitt gesehen, unsymmetrisch sind, wenn im wesentlichen keine Belastung auf die Aufhängungseinheit (10) einwirkt, dadurch gekennzeichnet, daß der Kleinstabstand zwischen zwei beliebigen Punkten, die beide sowohl auf der inneren Oberfläche des rohrförmigen Teiles (12) als auch auf einer durch die Längsachse des langgestreckten Körpers (30) verlaufenden Linie gelegen sind, größer ist als der Größtabstand zwischen zwei beliebigen Punkten, die beide sowohl auf der äußeren Oberfläche des langgestreckten Körpers (30) als auch auf einer durch die Längsachse des langgestreckten Körpers (30) verlaufenden Linie gelegen sind.

2. Aufhängungseinheit (10) nach Anspruch 1, bei der die langgestreckten, federnd verformbaren Glieder (42) bei Aufbringen einer Belastung auf die Aufhängungseinheit (10) gegen die genannten Bereiche der Kammer hin gedrängt werden.

3. Aufhängungseinheit (10) nach Anspruch 1, bei der die Anzahl der Erhöhungen (34) des langgestreckten Körpers (30), die Anzahl der genannten nach auswärts verformten Bereiche des rohrförmigen Teiles (12) und die Anzahl der federnd verformbaren Glieder (42) die gleiche ist.

4. Aufhängungseinheit (10) nach irgendeinem vorausgehenden Anspruch, bei der die Anzahl innerer Winkel, die größer als 180° sind, gleich der Anzahl der genannten nach auswärts verformten Bereiche des rohrförmigen Teiles ist.

5. Aufhängungseinheit (10) nach irgendeinem vorausgehenden Anspruch, bei der der rohrförmige Teil (12) eine Anzahl von Wänden (14) besitzt, von denen jede Wand nach auswärts verformt ist und die Verformung einen Gipfel (16) aufweist, der im wesentlichen an der Wand (14) in einem Drittelabstand von einem Ende dieser Wand (14) entfernt gelegen ist.

6. Aufhängungseinheit (10) nach Anspruch 5, bei der der Teil der Wand (14) des rohrförmigen Teiles (12), der sich von dem anderen Ende der genannten Wand (14) erstreckt, im wesentlichen keine Verformung nach außen aufweist.

7. Aufhängungseinheit (10) nach irgendeinem vorausgehenden Anspruch, bei der der langgestreckte Körper (30) einen konkaven Bereich zwischen einander benachbarten Erhebungen (34) aufweist.

8. Aufhängungseinheit (10) nach irgendeinem vorausgehenden Anspruch, bei der zumindest einer von langgestrecktem Körper (30) oder rohrförmigem Teil (12) ein Metall aufweist.

9. Aufhängungseinheit (10) nach irgendeinem vorausgehenden Anspruch, bei der ein Achsschenkel an dem von dem langgestreckten Körper (30) entfernten Ende des Drehmomentarmes (44) vorgesehen ist.

## Revendications

1. Bloc de suspension (10) comprenant une pièce tubulaire (12), une pièce allongée (30) s'étendant à travers la pièce tubulaire (12), la pièce allongée (30) pouvant entrer en rotation autour de son axe longitudinal, une jambe de force (44) étant connectée à l'une des extrémités de la pièce allongée (30), la paroi de la pièce allongée (30) comprenant plusieurs apex (34) s'étendant vers la pièce tubulaire (12), de manière telle que plusieurs chambres soient définies entre la paroi de la pièce allongée (30) et la pièce tubulaire (12), une pièce allongée élastiquement déformable (42) étant placée dans chaque chambre, dans lequel les chambres sont asymétriques lorsqu'elles sont vues en section lorsque globalement aucune charge n'est appliquée au bloc de suspension (10), caractérisé en ce que la distance minimale séparant deux points situés sur la surface interne de la pièce tubulaire (12) et sur une ligne passant par l'axe longitudinal de la pièce allongée (30) est supérieure à la distance maximale séparant deux points situés sur la surface externe de la pièce allongée (30) et sur une ligne passant par l'axe longitudinal de la pièce allongée (30).

2. Bloc de suspension (10) selon la revendication 1, dans lequel les pièces allongées élastiquement déformables (42) sont poussées vers lesdites régions de la chambre lors de l'application d'une charge au bloc de suspension (10).

3. Bloc de suspension (10) selon la revendication 1, dans lequel le nombre d'apex (34) de la pièce allongée (30), le nombre desdites régions déformées vers l'extérieur de la pièce tubulaire (12) et le nombre de pièces élastiquement déformables (42) sont les mêmes.

4. Bloc de suspension (10) selon l'une des revendications précédentes, dans lequel le nombre d'angles internes supérieurs à 180° est égal au nombre desdites régions déformées vers l'extérieur de la pièce tubulaire.

5. Bloc de suspension selon l'une des revendications précédentes, dans lequel la pièce tubulaire (12) comprend un certain nombre de parois (14), chaque paroi étant déformée vers l'extérieur, la déformation ayant un sommet (16) situé globalement au tiers de la distance le long de la paroi (14) depuis l'une des extrémités de cette paroi (14).

6. Bloc de suspension (10) selon la revendication 5, dans lequel la partie de la paroi (14) de la pièce tubulaire (12) qui s'étend à partir de l'autre extrémité de ladite paroi (14) n'est globalement pas déformée vers l'extérieur.

7. Bloc de suspension (10) selon l'une des revendications précédentes, dans lequel la pièce allongée (30) comprend une région concave entre deux apex adjacents (34).

8. Bloc de suspension (10) selon l'une des revendications précédentes, dans lequel au moins une de la pièce allongée (30) et de la pièce tubulaire (12) contient un métal.

9. Bloc de suspension (10) selon l'une des revendications précédentes, dans lequel une fusée d'essieu est connectée à l'extrémité de la jambe de force (44) éloignée de la pièce allongée (30).
